(19) Europäisches Patentamt

European Patent Office

Office européen des brevets

(11) **EP 1 623 629 A1**

(12) **EUROPEAN PATENT APPLICATION**

(43) Date of publication:
**08.02.2006 Bulletin 2006/06**

(51) Int Cl.:
*A23C 9/152* (2006.01)     *A23C 9/158* (2006.01)
*A23C 9/154* (2006.01)     *A23L 2/66* (2006.01)
*A23L 1/305* (2006.01)     *A23L 1/29* (2006.01)

(21) Application number: **05106942.5**

(22) Date of filing: **27.07.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **06.08.2004 US 912870**

(71) Applicant: **KRAFT FOODS HOLDINGS, INC. Northfield, Illinois 60093-2758 (US)**

(72) Inventors:
• **Cale, Kenneth William 10901, Suffern (US)**

• **Parker, Donna Maria 10954, Nanuet (US)**
• **Hauser, Patricia Carulli 10930, Highland Mills (US)**
• **Baril, Jean-Pierre 12524, Fishkill (US)**
• **Caplan, Zachary Pollack 10591, Tarrytown (US)**
• **Myers, Randolph 06511, New Haven (US)**

(74) Representative: **Smaggasgale, Gillian Helen W.P. Thompson & Co, 55 Drury Lane London WC2B 5SQ (GB)**

(54) **Nutritional non-cultured beverage composition**

(57)   The present invention provides a high quality, ready-to-drink, non-cultured nutritional beverage comprising (1) a protein component, (2) an emulsified fat component, (3) a fortification component, and (4) an optional sweetener component. The protein component comprises minimally processed milk; the emulsified fat component comprises dairy fat; the beverage contains about 1.5 to 10 percent total protein and about 0.15 to about 5 percent total fat; the beverage has a first ratio of the minimally processed milk protein divided by the total protein which is greater than or equal to about 0.05; the beverage has a second ratio of the dairy fat divided by the total fat which is greater than or equal to about 0.15; and the fortification component provides at least 10 percent of the daily value per single beverage serving of at least 6 vitamins and minerals.

EP 1 623 629 A1

**Description**

**FIELD OF THE INVENTION**

The invention relates to a high quality, ready-to-drink, non-cultured nutritional beverage. More specifically, the present invention relates to a high quality, ready-to-drink, non-cultured nutritional beverage comprising a protein component, (2) an emulsified fat component, (3) a fortification component, and (4) an optional sweetener component.

**BACKGROUND**

Nutritional or fortified beverages, especially of the ready-to-drink or consume type, have become very popular. Such products include sport or nutritional beverages, sport or nutritional gels, nutritional shakes, meal replacement beverages, and the like. Often such products possess poor, or at least less than desired, taste, mouthfeel, or other organoleptic properties. Consumers are often willing to accept such products with their inherent defects because of the nutritional benefit expected from the product. Of course, it would be desirable to provide nutritional or fortified beverages which provide the desired nutritional benefit and improved taste, mouthfeel, or other organoleptic properties.

Efforts have been made to provide such improved nutritional or fortified beverages. For example, International Application PCT/US/21303 (filed November 20, 1997; published May 28, 1998) provided an improved, water- based, liquid nutritional supplement comprising (1) a macro-nutrient component containing at least one protein source, at least one fat source, and at least one carbohydrate source, (2) a mineral micro-nutrient component containing specific amounts of potassium, calcium, magnesium, phosphorus, and iron. Generally, the total solids content of the supplement was greater than 30 percent.

U.S. Patent Publication 2002/0037353 (March 28, 2002) describes ready-to-drink fortified beverages which reportedly provide a rich, foamy product with a clean, improved mouthfeel and thickness without sliminess and a higher flavor impact at lower solids content. This beverage comprises (A) a water-insoluble component having particles with a mean particle size diameter of from about 0.1 to about 3.0 microns which comprises: (1) from about 0.2 to about 40% of a microparticulate component; (2) from about 0.0 to about 40% of a fat/oil component; (3) from about 0.0 to about 3.0% of an emulsifier; (4) from about 0 to about 5% of a microcrystalline cellulose; (B) a water-soluble component which comprises: (1) from about 0.075 to about 40% of a soluble beverage component; (2) from about 0.05 to about 30% of a thickener; (3) from about 0 to about 4% buffers; (4) from about 0 to about 60% foam stabilizer; (5) from about 0 to about 5% acid; (6) from about 0 to about 5% carbonate/bicarbonate; (7) from about 0 to about 50% sweetener; (8) from about 0 to about 20% milk solids; (9) from about 0 to about 3% processing aids; (10) from about 0.1 to about 5% of a vitamin/mineral mix; (C) from about 0 to about 10% of a flavorant; and (D) from about 0 to about 95% water; wherein the ratio of the water-insoluble to water-soluble components in said beverage product is about 0.300 or greater.

U.S. Patent 6,093,425 (July 25, 2000) provided a reportedly complete nutritional dairy-based product containing at least 27 of the nutrients included on the list of nutritionally essential macro- and micro-nutrients listed in the Code of Federal Regulation (21 CFR 101.9, 1998). The organoleptic properties of the resulting products are not discussed in detail. This patent does provide a detailed compilation of the nutritional profiles of commercially available nutritional milk-based products.

The present invention provides improved ready-to-drink, non-cultured nutritional beverages. By combining high quality protein (i.e., minimally processed milk protein), high quality fat (i.e., dairy fat), fortification levels which are managed to minimize their impact of taste, and sweeteners, the present invention provides a beverage having superior quality. More specifically, the present invention provides a nutritional ready-to-drink, non-cultured beverage which provides both good taste and organoleptic properties as well as nutritional benefit.

**SUMMARY OF THE INVENTION**

The present invention provides a high quality, ready-to-drink, non-cultured nutritional beverage. In one embodiment, the present invention provides high quality, ready-to-drink, non-cultured nutritional beverage comprising (1) a protein component comprising minimally processed milk protein; (2) an emulsified fat component comprising dairy fat; (3) a fortification component comprising vitamins and minerals; (4) an optional sweetener component; and (5) water; wherein the beverage contains about 1.5 to about 10 percent total protein and about 0.15 to about 5 percent total fat; wherein the beverage has a first ratio of the minimally processed milk protein divided by the total protein and wherein the first ratio is greater than or equal to about 0.05; wherein the beverage has a second ratio of the dairy fat divided by the total fat and wherein the second ratio is greater than or equal to 0.15; and wherein the fortification component provides at least 10 percent of the daily value per single beverage serving of at least 6 vitamins and minerals. In another embodiment, the present invention provides high quality, ready-to-drink, non-cultured nutritional beverage comprising (1) a protein component comprising minimally processed milk protein, dairy protein concentrate, and non-dairy protein; (2) an emulsified fat component comprising dairy fat and non-dairy fat; (3) a fortification component comprising vitamins and minerals; (4) an optional sweetener component; and (5) water; wherein the beverage contains about 1.5 to about 10 percent total protein and about 0.15 to about 5 percent total fat; wherein the beverage has a first ratio of the minimally processed milk protein divided by the total protein and wherein the first ratio is greater than or equal to about 0.05; wherein the beverage has a second ratio of the dairy fat divided by the total fat and wherein the second ratio is greater than or equal to 0.15; and wherein the fortification component provides at least 10 percent of the daily value per single beverage serving of at least 6 vitamins and minerals.

The combination of high quality protein (primarily minimally processed milk protein), high quality fat (primarily dairy fat), control of the fortification levels (e.g., restricted levels of thiamine), and the addition of optional sweeteners allow the production of a superior quality nutritional beverage which provides both good taste and organoleptic properties as well as nutritional benefit.

## DESCRIPTION OF THE PREFERRED EMBODIMENTS

The present invention provides a high quality, ready-to-drink, non-cultured nutritional beverage. More specifically, the present invention provides high quality, ready-to-drink, non-cultured nutritional beverage comprising (1) a protein component comprising minimally processed milk protein; (2) an emulsified fat component comprising dairy fat; (3) a fortification component comprising vitamins and minerals; (4) an optional sweetener component; and (5) water; wherein the beverage contains about 1.5 to about 10 percent total protein and about 0.15 to about 5 percent total fat; wherein the beverage has a first ratio of the minimally processed milk protein divided by the total protein and wherein the first ratio is greater than or equal to about 0.05; wherein the beverage has a second ratio of the dairy fat divided by the total fat and wherein the second ratio is greater than or equal to 0.15; and wherein the fortification component provides at least 10 percent of the daily value per single beverage serving of at least 6 vitamins and minerals. The present invention also provides high quality, ready-to-drink, non-cultured nutritional beverage comprising (1) a protein component comprising minimally processed milk protein, dairy protein concentrate, and non-dairy protein; (2) an emulsified fat component comprising dairy fat and non-dairy fat; (3) a fortification component comprising vitamins and minerals; (4) an optional sweetener component; and (5) water; wherein the beverage contains about 1.5 to about 10 percent total protein and about 0.15 to about 5 percent total fat; wherein the beverage has a first ratio of the minimally processed milk protein divided by the total protein and wherein the first ratio is greater than or equal to about 0.05; wherein the beverage has a second ratio of the dairy fat divided by the total fat and wherein the second ratio is greater than or equal to 0.15; and wherein the fortification component provides at least 10 percent of the daily value per single beverage serving of at least 6 vitamins and minerals. For purposes of this invention, a single beverage serving size is about 6 to about 12 ounces.

The combination of high quality protein (primarily minimally processed milk protein), high quality fat (primarily dairy fat), control of the fortification levels (e.g., restricted levels of thiamine), and addition of optional sweeteners allow the production of a superior quality nutritional beverage which provides both good taste and organoleptic properties as well as nutritional benefit.

The protein component comprises minimally processed milk protein such that the beverage contains about 1.5 to about 10 percent total protein and has a

$$\text{first ratio} = \frac{\text{minimally processed milk protein}}{\text{total protein}}$$

which is greater than or equal to 0.05. More preferably, this first ratio is greater than about 0.4, and even more preferably is about 0.8 to about 1. For purposes of this invention, "minimally processed milk protein" includes protein from single strength whole milk, reduced-fat milk, skim milk, and liquid or dry concentrated versions of whole milk, reduced-fat milk, or skim milk having a protein concentration, on a dry basis, similar to the starting single strength whole milk, reduced-fat milk, or skim milk. In addition to the minimally processed milk protein, the total protein may contain other types of protein, including for example, dairy protein concentrates and non-dairy proteins. For purposes of this invention, "dairy protein concentrates" include dairy protein sources containing, on a dry basis, protein concentrations greater than single strength whole milk, reduced-fat milk, or skim milk. Examples of such dairy protein concentrates include, for example, milk protein concentrates, caseinates, whey protein concentrates, and the like. For purposes of this invention, "non-dairy protein" includes, for example, soy protein, other plant proteins (e.g., wheat protein, protein from cocoa, protein from coffee, and the like), and the like.

The emulsified fat component comprises dairy fat such that the beverage contains about 0.15 to about 5 percent total fat and has a

$$second\ ratio = \frac{dairy\ fat}{total\ fat}$$

which is greater than about 0.15. More preferably, this second ratio is greater than about 0.6, and even more preferably is about 0.9 to about 1. Suitable dairy fats include, for example, fats obtained from or supplied from milk (whole, reduced fat, or low fat milks), heavy cream, light cream, half and half, and the like, as well as evaporated or dried version of the same. In addition to the dairy fat, the beverage may also contain other fats including non-dairy fats. Suitable non-dairy fats include, for example, vegetable oils (e.g., corn, canola, soybean, and the like), process oils (e.g., medium chain triglycerides), coconut oil, oils found in cocoa or coffee, oils from other plant sources, and the like.

As those skilled in the art will realize, the high quality protein (primarily minimally processed milk protein) and the high quality fat (primarily dairy fat) may be derived from the same dairy component or from separate dairy components. Likewise, the protein component and the emulsified fat components may be derived from the same dairy or other component or from separate dairy or other components.

Generally, the beverages of the present invention contain about 1.5 to about 10 percent total protein, about 0.15 to about 5 percent of total fat, an amount of the fortification component to provide at least six vitamins and minerals at 10 percent or more of the daily value per serving size for each of the at least six vitamins and minerals, about 0.001 to about 15 percent of the sweetener component, and about 75 to about 97 percent total water. More preferably the beverages of the present invention contain about 2 to about 5 percent total protein, about 0.5 to about 3.5 percent total fat, the amount of the fortification component to provide at least ten vitamins and minerals at 20 percent or more of the daily value per serving size for each of the at least six vitamins and minerals, about 0.003 to about 12 percent of the sweetener component, and about 80 to about 95 percent water.

The fortification component should provide at least 10 percent of the daily value per single beverage serving (generally about 6 to about 12 ounces) of at least 6 vitamins and minerals. More preferably, the fortification component provides at least about 20 percent of the daily value per single beverage serving of at least ten vitamins and minerals. Suitable vitamins and minerals include, for example, those listed as being nutritionally essential macro- and micro-nutrients in the Code of Federal Regulation (21 CFR 101.9 and 104.20, 2002). Suitable vitamins and minerals for use in the present invention are also included in the examples below. The beverage preferably contains less than about 4 ppm thiamine in order to reduce the adverse impact on organoleptic properties.

The sweetener component may contain natural or artificial sweeteners. Examples of such sweeteners include natural sugars such as sucrose, fructose, glucose, maltose, high fructose corn syrup, and lactose and artificial sweetening agents such as saccharin, aspartame, acesulfame potassium, and sucralose. Of course, others sweeteners normally used in food processing can be used if desired.

The following examples describe and illustrate the processes and products of the invention. These examples are intended to be merely illustrative of the present invention, and not limiting thereof in either scope or spirit. Unless indicated otherwise, all percentages and ratios are by weight. Those skilled in the art will readily understand that variations of the materials, conditions, and processes described in these examples can be used. All references cited herein are incorporated by reference.

**EXAMPLE 1.** A beverage was prepared using the following formulation:

| Ingredient | % |
|---|---|
| Water | 19.9 |
| Sugar | 5.6 |
| Milk | 23.5 |
| Skim Milk | 47.4 |
| Disodium phosphate | 0.15 |
| Potassium Bicarbonate | 0.05 |
| Milk Protein Concentrate | 0.25 |
| Sodium Caseinate | 0.25 |

Table continued

| Ingredient | % |
|---|---|
| Inulin | 0.7 |
| Gum Arabic | 0.7 |
| Artificial Flavor | 0.08 |
| Carrageenan | 0.02 |
| Antifoam | 0.01 |
| Microcrystalline Cellulose | 0.4 |
| Cocoa | 0.5 |
| Vitamin/Mineral Premix | 0.58 |

The vitamin/mineral premix provided the following fortification levels:

| Vitamin/Mineral | Daily Value (%)* |
|---|---|
| Sodium Ascorbate (Vitamin C) | 100 |
| Biotin (Vitamin H) | 35 |
| d-Calcium Pantothenate (Vitamin B5) | 35 |
| Folic Acid (Vitamin B9) | 35 |
| Niacinamide (Vitamin B3) | 35 |
| Pyridoxine Hydrochloride (Vitamin B6) | 35 |
| Riboflavin (Vitamin B2) | 35 |
| Thiamine Mononitrate (Vitamin B1) | 15 |
| Vitamin A Pamitate | 35 |
| Cyanocobalamin (Vitamin B12) - 0.1% potency | 35 |
| Cholecalciferol (Vitamin D3) | 25 |
| Tocopheryl Acetate (Vitamin E Acetate) | 100 |
| Phytonadione (Vitamin K1) | 35 |
| Chromium (Chromium Chloride) | 35 |
| Copper (Copper Gluconate) | 15 |
| Iron (Ferric Orthophosphate) | 25 |
| Magnesium (Magnesium Phosphate) | 35 |
| Manganese (Manganese Sulfate) | 25 |
| Molybdenum (Sodium Molybdate) | 35 |
| Iodine (Potassium Iodide) | 35 |
| Selenium (Sodium Selenite) | 35 |
| Zinc (Zinc Gluconate) | 25 |
| Phosphorous (Magnesium Phosphate) | 7 |
| * Based on 11 oz beverage serving size. | |

Three dry mix blends were prepared: Premix A - microcrystalline cellulose and sugar; Premix B - artificial flavor, buffers, vitamin/mineral premix, carageenan, gum arabic, and sugar; and Premix C - milk protein concentrate, sodium caseinate, gum arabic, inulin, cocoa, and sugar. Antifoam, and then skim milk, was added to softened water with high shear mixing. Premix A was then added and mixed for about 5 minutes. Premix B was then added with further mixing for about 10 minutes. After adding additional softened water, Premix C was added with further mixing for about 10 minutes. The remaining ingredients were then added and the resulting composition mixed until uniform.

The composition was then homogenized using a two-stage homogenizer operated at 500/2500 psi. The homogenized mixture was then heated to about 290°F for at least 4 seconds to achieve an $F_0$ of about 10.6 and then cooled to 78°F before being sealed in pre-sterilized containers ($H_2O_2$ treated) under aseptic conditions.

The resulting beverage delivered a high quality dairy flavor and texture with no vitamin/mineral aftertaste. The beverage contained about 2.9 percent total protein and about 0.8 percent total fat and had a first ratio of about 0.82 and a second ratio of about 0.97.

**EXAMPLE 2**. A beverage was prepared using the following formulation:

| Ingredient | % |
|---|---|
| Water | 33.0 |
| Sugar | 7.0 |
| Milk | 24.6 |
| Skim Milk | 34.1 |
| Disodium phosphate | 0.15 |
| Potassium Bicarbonate | 0.05 |
| Tricalcium Phosphate | 0.13 |
| Artificial Flavor | 0.08 |
| Carrageenan | 0.02 |
| Microcrystalline Cellulose | 0.4 |
| Cocoa | 0.5 |
| Vitamin/Mineral Premix | 0.58 |

The vitamin/mineral premix provided the following fortification levels:

| Vitamin/Mineral | Daily Value (%)* |
|---|---|
| Calcium | 30 |
| Cyanocobalamin (Vitamin B12) - 0.1% potency | 15 |
| Cholecalciferol (Vitamin D3) | 25 |
| Phosphorous (Magnesium Phosphate) | 25 |
| Riboflavin (Vitamin B2) | 25 |
| Vitamin A Pamitate | 10 |
| * Based on 11 oz beverage serving size. | |

The microcrystalline cellulose and carrageenan were dispersed under high shear in water. The following ingredients were then added, in the order listed, with high shear mixing: skim milk, vitamin/mineral premix, cocoa, and buffers. The resulting composition was then blended with the remaining ingredients with heating to about 165°F and then homogenized at about 3000 psi. The homogenized mixture was cooled to room temperature and filled into glass bottles. The bottled beverage was retorted at about 250°F for at least 24 minutes and then cooled to below 80°F.

The resulting beverage had a rich dairy flavor with a creamy, milk-like texture. The beverage contained about 2.2 percent total protein and about 0.9 percent total fat and had a first ratio of about 0.90 and a second ratio of about 0.94.

**EXAMPLE 3.** A beverage was prepared using the following formulation:

| Ingredient | % |
|---|---|
| Water | 15.0 |
| Sugar | 7.25 |
| Milk | 16.7 |
| Skim Milk | 57.1 |
| Disodium phosphate | 0.15 |
| Potassium Bicarbonate | 0.05 |
| Milk Protein Concentrate | 0.24 |
| Sodium Caseinate | 0.25 |
| Inulin | 0.75 |
| Gum Arabic | 0.7 |
| Artificial Flavor | 0.08 |
| Carrageenan | 0.02 |
| Microcrystalline Cellulose | 0.2 |
| Cocoa | 1.0 |
| Vitamin/Mineral Premix | 0.58 |

The vitamin/mineral premix provided the following fortification levels:

| Vitamin/Mineral | Daily Value (%)* |
|---|---|
| Sodium Ascorbate (Vitamin C) | 100 |
| Biotin (Vitamin H) | 35 |
| d-Calcium Pantothenate (Vitamin B5) | 35 |
| Folic Acid (Vitamin B9) | 35 |
| Niacinamide (Vitamin B3) | 35 |
| Pyridoxine Hydrochloride (Vitamin B6) | 35 |
| Riboflavin (Vitamin B2) | 35 |
| Thiamine Mononitrate (Vitamin B1) | 15 |
| Vitamin A Pamitate | 35 |
| Cyanocobalamin (Vitamin B12) - 0.1 % potency | 35 |
| Cholecalciferol (Vitamin D3) | 25 |
| Tocopheryl Acetate (Vitamin E Acetate) | 100 |
| Phytonadione (Vitamin K1) | 35 |
| Chromium (Chromium Chloride) | 35 |
| Copper (Copper Gluconate) | 15 |
| Iron (Ferric Orthophosphate) | 25 |
| Magnesium (Magnesium Phosphate) | 35 |
| Manganese (Manganese Sulfate) | 25 |

Table continued

| Vitamin/Mineral | Daily Value (%)* |
|---|---|
| Molybdenum (Sodium Molybdate) | 35 |
| Iodine (Potassium Iodide) | 35 |
| Selenium (Sodium Selenite) | 35 |
| Zinc (Zinc Gluconate) | 25 |
| Phosphorous (Magnesium Phosphate) | 7 |
| * Based on 10 oz beverage serving size. | |

The buffers were dispersed in a portion of the water; after adding the gums, the mixture was mixed with high shear for about 5 minutes. The remaining dry ingredients were added. The resulting mixture was then slowly dispersed in the remaining water after which the mixture was subjected to high shear for about 5 minutes. The mixture was then blended with the milk and pasteurized by heating to 285°F for about 5 seconds and then homogenized at about 2500 psi. After cooling, the resulting beverage was filled in sterile glass bottles at 65-80°F and immediately refrigerated.

For the resulting beverage, the first ratio was about 0.8; the second ratio was about 0.94.

The product was compared with a commercial product (i.e., Ultra Slim Fast Creamy Chocolate; first ratio of about 0.84 and second ratio of about <0.1) in a taste test (approximately 100 testers). Using a scale of 1 (worst) to 9 (best), testers overwhelmingly preferred the inventive product (score 6.8) over the commercial product (score 3.6); the preference was significant at greater than 99% confidence level. This illustrates the critical nature of the fat composition on perceived product quality.

EXAMPLE 4. Two inventive beverages having the following formulations were prepared using the same method as in Example 1.

| | Amount (%) | |
|---|---|---|
| | Low Processed Protein | High Processed Protein |
| Water | 17.1 | 15.3 |
| Sugar | 7.25 | 7.25 |
| Milk | 23.3 | 23.3 |
| Skim Milk | 48.8 | 48.8 |
| Disodium phosphate | 0.15 | 0.15 |
| Potassium Bicarbonate | 0.05 | 0.05 |
| Milk protein concentrate | 0.24 | 1.1 |
| Sodium caseinate | 0.25 | 1.15 |
| Soluble fiber | 0.75 | 0.75 |
| Gum Arabic | 0.7 | 0.7 |
| Artificial flavor | 0.7 | 0.7 |
| N&A flavor - vanilla | 0.05 | 0.05 |
| Carrageenan | 0.02 | 0.02 |
| Microcrystalline cellulose | 0.2 | 0.2 |
| Cocoa | 0 | 0.5 |
| Vitamin/Mineral Premix | 0.58 | 0.58 |
| First Ratio | 0.83 | 0.55 |

Table continued

| | Amount (%) | |
| --- | --- | --- |
| | Low Processed Protein | High Processed Protein |
| Second Ratio | 0.96 | 0.93 |

These two inventive samples mainly differ in the amount of processed protein (i.e., sodium caseinate and milk protein concentrate).

Using the same preference scale as in Example 1, testers preferred both inventive beverages over the commercial product (i.e., Ultra Slim Fast Creamy Chocolate) tested in Example 1. However, between the two inventive beverages, testers preferred the low processed protein beverage (score 7.4) over the high processed protein beverage (score 6.2). This preference was significant at a 95% confidence level. This example illustrates the importance of the protein quality (i.e., the first ratio) on the organoleptic properties.

**EXAMPLE 5**. A beverage was prepared using the following formulation:

| Ingredient | % |
| --- | --- |
| Water | 51.7 |
| Whole Milk | 39.6 |
| Milk Protein Concentrate | 3.8 |
| Gum Arabic | 1.5 |
| Non Fat Dry Milk | 1.5 |
| Vitamin/Mineral Premix | 0.5 |
| Cocoa | 0.5 |
| Microcrystalline Cellulose | 0.4 |
| Dipotassium Phosphate | 0.2 |
| Artificial Flavor | 0.08 |
| Artificial Sweetener | 0.03 |
| Carrageenan | 0.02 |
| Antifoam | 0.08 |

The vitamin/mineral premix provided the following fortification levels:

| Vitamin/Mineral | Daily Value (%)* |
| --- | --- |
| Sodium Ascorbate (Vitamin C) | 100 |
| Biotin (Vitamin H) | 35 |
| d-Calcium Pantothenate (Vitamin B5) | 35 |
| Folic Acid (Vitamin B9) | 35 |
| Niacinamide (Vitamin B3) | 35 |
| Pyridoxine Hydrochloride (Vitamin B6) | 35 |
| Riboflavin (Vitamin B2) | 35 |
| Vitamin A Pamitate | 35 |
| Cyanocobalamin (Vitamin B12) - 0.1 % potency | 35 |

Table continued

| Vitamin/Mineral | Daily Value (%)* |
|---|---|
| Cholecalciferol (Vitamin D3) | 25 |
| Tocopheryl Acetate (Vitamin E Acetate) | 100 |
| Phytonadione (Vitamin K1) | 35 |
| Chromium (Chromium Chloride) | 35 |
| Iron (Ferric Orthophosphate) | 25 |
| Magnesium (Magnesium Phosphate) | 35 |
| Manganese (Manganese Sulfate) | 25 |
| Molybdenum (Sodium Molybdate) | 35 |
| Iodine (Potassium Iodide) | 35 |
| Selenium (Sodium Selenite) | 35 |
| Zinc (Zinc Gluconate) | 25 |
| * Based on 11 oz beverage serving size. | |

To fully hydrate all of the raw materials, two sub-batches were used. To form the first sub-batch, a high-shear mixer was filled with cold water as the following ingredients were added: antifoam, microcrystalline cellulose, dipotassium phosphate, non fat dry milk, artificial flavor, vitamin/mineral premix, gum arabic, and the artificial sweetener. The first sub-batch was mixed for 10 minutes before being sent to a main batch tank. To form the second sub-batch, the high-shear mixer was then filled with hot water as the remaining ingredients were added: carrageenan, cocoa, and milk protein concentrate. The second sub-batch was mixed for a total of 30 minutes before being sent to the main tank. The remaining water was used to flush the system before being sent to the main tank. The whole milk was then added directly to the main tank.

The combined blend was then heated to about 290°F for at least 4 seconds to achieve an $F_0$ of about 10.6, cooled to 170°F, homogenized using a two-stage homogenizer operating at 500/2500 psi, cooled to 70°F, and sealed in pre-sterilized ($H_2O_2$ treated) containers under aseptic conditions.

The resulting beverage delivered a high quality dairy flavor and texture with no vitamin/mineral aftertaste. The beverage contained about 4.7 percent total protein and about 1.5 percent total fat and had a first ratio of about 0.4 and a second ratio of about 0.9.

**EXAMPLE 6.** A beverage was prepared using the following formulation:

| Ingredient | % |
|---|---|
| Water | 77.9 |
| Whole Milk | 11.5 |
| Milk Protein Concentrate | 5.5 |
| Gum Arabic | 1.5 |
| Canola Oil | 1.8 |
| Vitamin/Mineral Premix | 0.5 |
| Cocoa | 0.5 |
| Microcrystalline Cellulose | 0.4 |
| Disodium Phosphate | 0.15 |
| Potassium Bicarbonate | 0.05 |
| Artificial Flavor | 0.08 |

Table continued

| Ingredient | % |
|---|---|
| Artificial Sweetener | 0.03 |
| Carrageenan | 0.04 |
| Antifoam | 0.08 |

The vitamin/mineral premix provided the following fortification levels:

| Vitamin/Mineral | Daily Value (%)* |
|---|---|
| Sodium Ascorbate (Vitamin C) | 100 |
| Biotin (Vitamin H) | 35 |
| d-Calcium Pantothenate (Vitamin B5) . | 35 |
| Folic Acid (Vitamin B9) | 35 |
| Niacinamide (Vitamin B3) | 35 |
| Pyridoxine Hydrochloride (Vitamin B6) | 35 |
| Riboflavin (Vitamin B2) | 35 |
| Vitamin A Pamitate | 35 |
| Cyanocobalamin (Vitamin B12) - 0.1% potency | 35 |
| Cholecalciferol (Vitamin D3) | 25 |
| Tocopheryl Acetate (Vitamin E Acetate) | 100 |
| Phytonadione (Vitamin K1) | 35 |
| Chromium (Chromium Chloride) | 35 |
| Iron (Ferric Orthophosphate) | 25 |
| Magnesium (Magnesium Phosphate) | 35 |
| Manganese (Manganese Sulfate) | 25 |
| Molybdenum (Sodium Molybdate) | 35 |
| Iodine (Potassium Iodide) | 35 |
| Selenium (Sodium Selenite) | 35 |
| Zinc (Zinc Gluconate) | 25 |
| * Based on 11 oz beverage serving size. | |

To fully hydrate all of the raw materials, two sub-batches were used. To form the first sub-batch, a high-shear mixer was filled with cold water as the following ingredients were added: antifoam, microcrystalline cellulose, disodium phosphate, potassium bicarbonate, artificial flavor, vitamin/mineral premix, gum arabic, and the artificial sweetener. The first sub-batch was mixed for 10 minutes before being sent to a main batch tank. To form the second sub-batch, the high-shear mixer was then filled with hot water as the remaining ingredients were added: carrageenan, cocoa, milk protein concentrate, and canola oil. The second sub-batch was mixed for a total of 30 minutes before being sent to the main tank. The remaining water was used to flush the system before being sent to the main tank. The whole milk was then added directly to the main tank.

The combined blend was then heated to about 290°F for at least 4 seconds to achieve an $F_o$ of about 10.6, cooled to 170°F, homogenized using a two-stage homogenizer operating at 500/2500 psi, cooled to 70°F, and sealed in pre-sterilized ($h_2O_2$ treated) containers under aseptic conditions.

The resulting beverage delivered a high quality dairy flavor and texture with no vitamin/mineral aftertaste. The beverage contained about 5.4 percent total protein and about 2.3 percent total fat and had a first ratio of about 0.07 and a second ratio of about 0.16.

<u>EXAMPLE 7.</u> The table below compares the inventive beverages with several commercially available nutritional beverages. Beverages produced by the present invention were organoleptically superior to the commercially available products examined.

| | Inventive | Slim Fast Creamy Chocolate | Carnation Instant Breakfast (Creamy Milk Chocolate) | Ensure Vanilla | Boost Chocolate |
|---|---|---|---|---|---|
| Protein Source | minimally processed milk protein comprising at least about 45% of total protein | Skim milk; sodium caseinate | Nonfat milk; complete milk protein | Sodium caseinate; soy protein isolate; whey protein concentrate | Milk protein concentrate |
| Protein (%) | 1.5 - 10 | 2.9 | 3.9 | 3.6 | 4.0 |
| First Ratio | $\geq 0.05$ | 0.84 | 0.5 | 0 | 0 |
| Fat Source | dairy fat comprising at least about 33% of total fat | Canola oil; soy oil; soy lecithin; mono- & diglycerides; skim milk | Corn oil; mono- & diglycerides; skim milk | High oleic safflower oil; canola oil; corn oil; soy lecithin | Canola oil; high oleic sunflower oil; soy lecithin |
| Fat (%) | 0.15 - 5 | 0.9 | 0.8 | 2.4 | 1.6 |
| Second Ratio | $\geq 0.15$ | <0.1 | <0.1 | 0 | 0 |

**Claims**

1. A high quality, ready-to-drink, uncultured nutritional beverage comprising (1) a protein component comprising minimally processed milk protein; (2) an fat component comprising dairy fat; (3) a fortification component comprising vitamins and minerals; and (4) water; wherein the beverage contains about 1.5 to 10 percent total protein and about 0.15 to about 5 percent total fat; wherein the beverage has a first ratio of the minimally processed milk protein divided by the total protein and wherein the first ratio is greater than or equal to about 0.05; wherein the beverage has a second ratio of the dairy fat divided by the total fat and wherein the second ratio is greater than or to 0.15; and the fortification component provides at least 10 percent of the daily value per single beverage serving of at least 6 vitamins and minerals.

2. A high quality, ready-to-drink, uncultured nutritional beverage comprising (1) a protein component comprising minimally processed milk protein, dairy protein concentrate, and non-dairy protein; (2) an emulsified fat component comprising dairy fat and non-dairy fat; (3) a fortification component comprising vitamins and minerals; (4) water; wherein the beverage contains about 1.5 to about 10 percent total protein and about 0.15 to about 5 percent total fat; wherein the beverage has a first ratio of the minimally processed milk protein divided by the total protein and wherein the first ratio is greater than or to about 0.05; wherein the beverage has a second ratio of the dairy fat divided by the total fat and wherein the second ratio is greater than or equal to 0.15; and wherein the fortification component provides at least 10 percent of the daily value per single beverage serving of at least 6 vitamins and minerals.

3. The beverage as defined in Claim 1 or 2, wherein the first ratio is greater than about 0,4 and the second ratio is greater than about 0.6,

4. The beverage as defined in any one of Claims 1 to wherein the first ratio is greater than about 0.8 and the second ratio is greater than about 0.9.

5. The beverage as defined in any one of Claims I to 4, wherein the first ratio is about 0.8 to about 1 and the second ratio is about 0.9 to about 1.

6. The beverage as in one of Claims 1 to 5, wherein the total protein is about 1.5 to about 6 percent and the total fat component is about 0.5 to about 3.5 percent.

7. The beverage as defined in any one of Claims 1 to 6 further comprising a sweetener component.

8. The beverage as defined in Claim 7 comprising about 0.001 to about 15 percent of a component.

9. The beverage as defined in Claim 7 or 8, wherein the total protein is about 2 to about 5 and the sweetener component is present at about 0.003 to about 12 percent.

10. The beverage as defined in Claim 7, wherein the total protein is about 1 .5 to about 6 percent, the total fat is about 0.5 to about 3.5 percent, and the sweetener component is present at about 0.001 to about 15 percent.

11. The beverage as defined in any one of Claims 1 to 10, wherein the fortification component provides at least about 20 of the daily value per single beverage serving of at least 10 vitamins and minerals.

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | US 6 093 425 A (KAMAREI ET AL) 25 July 2000 (2000-07-25) * column 6, paragraph 4; claim 1; tables 11-14 * | 1,3-11 | A23C9/152 A23C9/158 A23C9/154 A23L2/66 A23L1/305 A23L1/29 |
| P,X | US 2004/265461 A1 (CALE KENNETH WILLIAM ET AL) 30 December 2004 (2004-12-30) * claims * | 1-11 | |
| X | US 6 039 986 A (MALLANGI ET AL) 21 March 2000 (2000-03-21) * examples 2-4 * | 1,3-11 | |
| X | WO 94/05159 A (LA SOCIETE COOPERATIVE MONT-BLANC; STEILS, ANNE; GEROME, JEAN-MICHEL;) 17 March 1994 (1994-03-17) * pages 19,20 * | 1,3-7 | |
| X | EP 0 705 539 A (FRIESLAND BRANDS B.V) 10 April 1996 (1996-04-10) * example VIII * | 1,6-8,10 | |
| A | DE 197 35 385 A1 (RUDOLF WILD GMBH & CO. KG, 69214 EPPELHEIM, DE) 18 February 1999 (1999-02-18) * examples * | 1-11 | TECHNICAL FIELDS SEARCHED (Int.Cl.7) A23C A23L |

The present search report has been drawn up for all claims

| Place of search | Date of completion of the search | Examiner |
|---|---|---|
| The Hague | 24 August 2005 | Koch, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 623 629 A1

## ANNEX TO THE EUROPEAN SEARCH REPORT
## ON EUROPEAN PATENT APPLICATION NO.

EP 05 10 6942

This annex lists the patent family members relating to the patent documents cited in the above-mentioned European search report.
The members are as contained in the European Patent Office EDP file on
The European Patent Office is in no way liable for these particulars which are merely given for the purpose of information.

24-08-2005

| Patent document cited in search report | | Publication date | Patent family member(s) | | Publication date |
|---|---|---|---|---|---|
| US 6093425 | A | 25-07-2000 | US 6030650 | A | 29-02-2000 |
| | | | US 5985339 | A | 16-11-1999 |
| | | | AU 5397699 | A | 17-11-2000 |
| | | | WO 0065935 | A1 | 09-11-2000 |
| | | | US 6039985 | A | 21-03-2000 |
| | | | US 6194009 | B1 | 27-02-2001 |
| US 2004265461 | A1 | 30-12-2004 | CA 2469374 | A1 | 27-12-2004 |
| | | | CN 1575667 | A | 09-02-2005 |
| | | | US 2005069618 | A1 | 31-03-2005 |
| US 6039986 | A | 21-03-2000 | AT 264069 | T | 15-04-2004 |
| | | | AU 751510 | B2 | 15-08-2002 |
| | | | AU 4512899 | A | 01-02-2000 |
| | | | BR 9912030 | A | 03-04-2001 |
| | | | CA 2334489 | A1 | 20-01-2000 |
| | | | CN 1129371 | C | 03-12-2003 |
| | | | DE 69916454 | D1 | 19-05-2004 |
| | | | DE 69916454 | T2 | 14-04-2005 |
| | | | DK 1096864 | T3 | 19-07-2004 |
| | | | WO 0002462 | A1 | 20-01-2000 |
| | | | EP 1096864 | A1 | 09-05-2001 |
| | | | ES 2219025 | T3 | 16-11-2004 |
| | | | HK 1039259 | A1 | 28-05-2004 |
| | | | ID 29387 | A | 30-08-2001 |
| | | | JP 2002520004 | T | 09-07-2002 |
| | | | NO 20010070 | A | 05-01-2001 |
| | | | NZ 508197 | A | 29-08-2003 |
| | | | PT 1096864 | T | 30-09-2004 |
| | | | RU 2235482 | C2 | 10-09-2004 |
| | | | TR 200100007 | T2 | 21-05-2001 |
| WO 9405159 | A | 17-03-1994 | BE 1006217 | A6 | 14-06-1994 |
| | | | WO 9405159 | A2 | 17-03-1994 |
| EP 0705539 | A | 10-04-1996 | NL 9401644 | A | 01-05-1996 |
| | | | AT 231346 | T | 15-02-2003 |
| | | | CN 1125514 | A ,C | 03-07-1996 |
| | | | DE 69529445 | D1 | 27-02-2003 |
| | | | EP 0705539 | A2 | 10-04-1996 |
| | | | ES 2185682 | T3 | 01-05-2003 |
| | | | NL 1001372 | C2 | 12-09-1996 |
| | | | NL 1001372 | A1 | 11-07-1996 |
| DE 19735385 | A1 | 18-02-1999 | AT 236532 | T | 15-04-2003 |
| | | | AU 8979298 | A | 08-03-1999 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 05 10 6942

This annex lists the patent family members relating to the patent documents cited in the above-mentioned European search report.
The members are as contained in the European Patent Office EDP file on
The European Patent Office is in no way liable for these particulars which are merely given for the purpose of information.

24-08-2005

| Patent document cited in search report | Publication date | Patent family member(s) | | Publication date |
|---|---|---|---|---|
| DE 19735385 A1 | | CA 2300984 | A1 | 25-02-1999 |
| | | DE 59807890 | D1 | 15-05-2003 |
| | | DK 1003380 | T3 | 26-05-2003 |
| | | WO 9908541 | A1 | 25-02-1999 |
| | | EP 1003380 | A1 | 31-05-2000 |
| | | ES 2194344 | T3 | 16-11-2003 |
| | | PL 338676 | A1 | 20-11-2000 |
| | | PT 1003380 | T | 29-08-2003 |
| | | SI 1003380 | T1 | 31-08-2003 |
| | | US 6413561 | B1 | 02-07-2002 |

EPO FORM P0459

For more details about this annex : see Official Journal of the European Patent Office, No. 12/82